# EUROPEAN PATENT APPLICATION

(11) **EP 3 297 356 A1**
(43) Date of publication of application: **21.03.2018**
(21) Application number: 16792774.8
(22) Date of filing: 13.05.2016
(51) Int. Cl.: H04W 72/04

(54) **USER TERMINAL, WIRELESS BASE STATION, WIRELESS COMMUNICATION SYSTEM, AND WIRELESS COMMUNICATION METHOD**

(30) Priority: 14.05.2015 JP 2015099542
(71) Applicant: NTT DOCOMO, INC., Chiyoda-ku Tokyo 100-6150 (JP)
(72) Inventor: TAKEDA, Kazuaki, Tokyo 100-6150 (JP); MOROGA, Hideyuki, Tokyo 1006150 (JP); NAGATA, Satoshi, Tokyo 100-6150 (JP); MU, Qin, Beijing 100190 (CN); LIU, Liu, Beijing 100190 (CN)
(74) Representative: Hoffmann Eitle
(86) International application number: PCT/JP2016/064244
(87) International publication number: WO 2016/182050

(57) **Abstract**

The present invention is designed to reduce the decrease of throughput in communication by user terminals that are limited to using a partial narrow band in a system band as a band for their use. According to one aspect of the present invention, a user terminal, in which the band to use is limited to a partial narrow band in a system band, has a control section that selects a predetermined narrow band set that is formed with a plurality of narrow bands, and a receiving section that receives a downlink signal in a narrow band that is included in the predetermined narrow band set, and the control section selects the predetermined narrow band set from a plurality of narrow band sets, to which different frequency shifts are applied.

## Description

### Technical Field

The present invention relates to a user terminal, a radio base station, a radio communication system and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, successor systems of LTE (also referred to as, for example, "LTE-advanced" (hereinafter referred to as "LTE-A"), "FRA" (Future Radio Access) and so on) are under study for the purpose of achieving further broadbandization and increased speed beyond LTE.

Now, accompanying the cost reduction of communication devices in recent years, active development is in progress in the field of technology related to machine-to-machine communication (M2M) to implement automatic control of network-connected devices and allow these devices to communicate with each other without involving people. In particular, 3GPP (3rd Generation Partnership Project) is promoting the standardization of MTC (Machine-Type Communication) for cellular systems for machine-to-machine communication, among all M2M technologies (see non-patent literature 2). MTC terminals (MTC UE (User Equipment)) are being studied for use in a wide range of fields such as, for example, electric meters, gas meters, vending machines, vehicles and other industrial equipment.

### Citation List

### Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2"
Non-Patent Literature 2: 3GPP TS 36.888 "Study on provision of low-cost Machine-Type Communications (MTC) User Equipments (UEs) based on LTE (Release 12)"

### Summary of Invention

### Technical Problem

From the perspective of reducing the cost and improving the coverage area in cellular systems, amongst all MTC terminals, low-cost MTC terminals (LC-MTC UEs) that can be implemented in simple hardware structures have been increasing in demand. Low-cost MTC terminals can be implemented by limiting the uplink (UL) band and the downlink (DL) band to use to part of a system band. A system band is equivalent to, for example, an existing LTE band (for example, 20 MHz), a component carrier (CC) and so on.

MTC terminals are under study to use bands (narrow band) that are narrower than the normal LTE band as bands for their use in UL and DL. In this case, in wireless communication by MTC terminals, narrow bands (NBs) that are comprised of a plurality of PRBs (Physical Resource Blocks) might be used.

Meanwhile, to normal terminals (normal UEs), data is allocated in the units of per predetermined resource block group (RBG: Resource Block Group) that is formed with a plurality of PRBs. Also, PRBs that constitute a narrow band may be used not only by MTC terminals, but also by normal terminals where allocation is controlled in RBG units. In this case, if the PRBs that constitute an RGB and the PRBs that constitute a narrow band overlap in part, an MTC terminal can use only a portion of the narrow band (NB), and the throughput might decrease.

The present invention has been made in view of the above, and it is therefore an object of the present invention to provide a user terminal, a radio base station, a radio communication system and a radio communication method that can reduce the decrease of throughput in communication by user terminals that are limited to using partial narrow bands in a system band as bands for their use.

### Solution to Problem

According to one aspect of the present invention, a user terminal, in which the band to use is limited to a partial narrow band in a system band, has a receiving section that receives a downlink signal in a narrow band that is included in the predetermined narrow band set, a control section that selects a predetermined narrow band set that is formed with a plurality of narrow bands, and the control section selects the predetermined narrow band set from a plurality of narrow band sets, to which different frequency shifts are applied.

### Advantageous Effects of Invention

According to the present invention, it is possible to reduce the decrease of throughput in communication by user terminals that are limited to using partial narrow bands in a system band as bands for their use.

### Brief Description of Drawings

FIG. 1 is a diagram to show an example of the arrangement of narrow bands in a system band;
FIG. 2 is a table to show the relationship between the length of the whole system band and the number of PRBs per RBG;
FIG. 3 is a diagram to show an example of the arrangement of NBs, RBGs and PRBs in a system band;
FIGs. 4 provide diagrams to show examples of the arrangement of radio resources according to a first embodiment;
FIGs. 5 provide diagrams to show examples of the arrangement of radio resources according to a second embodiment;
FIG. 6 is a diagram to show an example of the arrangement of radio resources according to a third embodiment;
FIG. 7 is a diagram to show a schematic structure of a radio communication system according to an embodiment of the present invention;
FIG. 8 is a diagram to show an example of an overall structure of a radio base station according to an embodiment of the present invention;
FIG. 9 is a diagram to show an example of a functional structure of a radio base station according to an embodiment of the present invention;
FIG. 10 is a diagram to show an example of an overall structure of a user terminal according to an embodiment of the present invention; and
FIG. 11 is a diagram to show an example of a functional structure of a user terminal according to an embodiment of the present invention.

### Description of Embodiments

Studies are in progress to simplify the hardware structures of low-cost MTC terminals at the risk of lowering their processing capabilities. For example, studies are in progress to lower the peak rate low, limit the transport block size, limit the resource blocks (also referred to as "RBs," "PRBs" (Physical Resource Blocks), and so on), and limit the RFs to receive, and so on, in low-cost MTC terminals, in comparison to existing user terminals (LTE terminals).

Low-cost MTC terminals may be referred to simply as "MTC terminals." Also, existing user terminals may be referred to as "normal user terminals," "normal UEs," "non-MTC UEs," and so on. Also, when a "user terminal" (UE) is simply mentioned, this can be either an MTC terminal or an existing user terminal.

Unlike existing user terminals, in which the system band (for example, 20 MHz, one component carrier, etc.) is configured as the upper limit band for use, the upper limit band for use for MTC terminals is limited to a predetermined narrow band (for example, 1.4 MHz). Studies are in progress to run such band-limited MTC terminals in LTE/LTE-A system bands, considering the relationship with existing user terminals.

For example, LTE/LTE-A system bands support frequency-multiplexing of band-limited MTC terminals and band-unlimited existing user terminals. Consequently, MTC terminals may be seen as terminals in which the maximum band to support is a partial narrow band in a system band, or may be seen as terminals which have the functions for transmitting/receiving in a narrower band than LTE/LTE-A system bands.

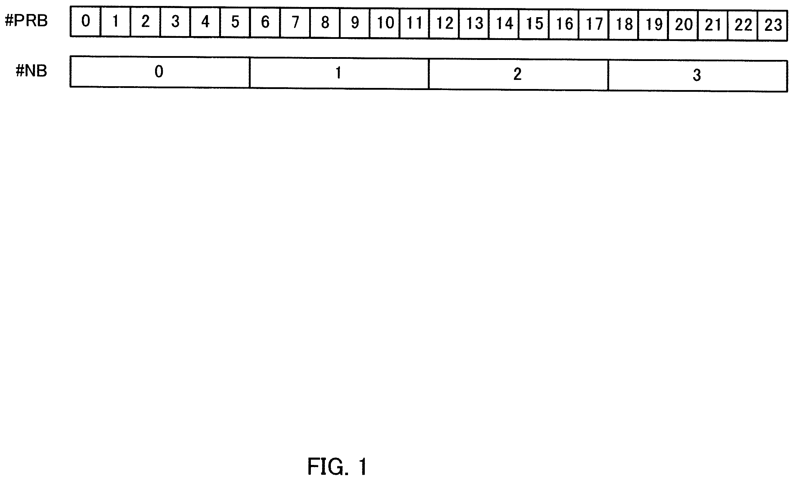

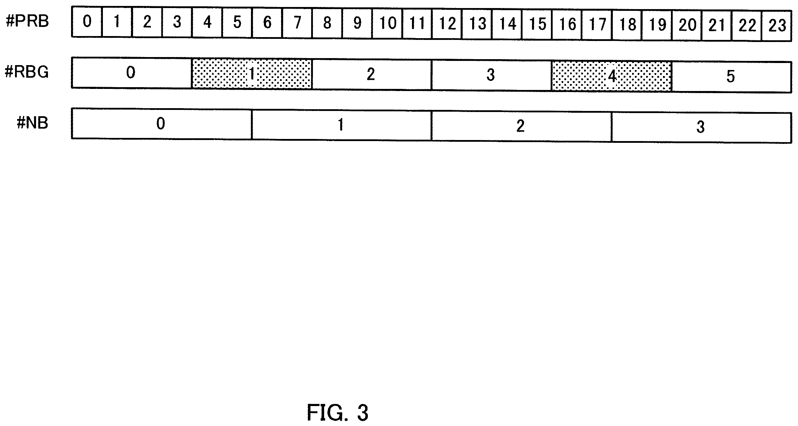

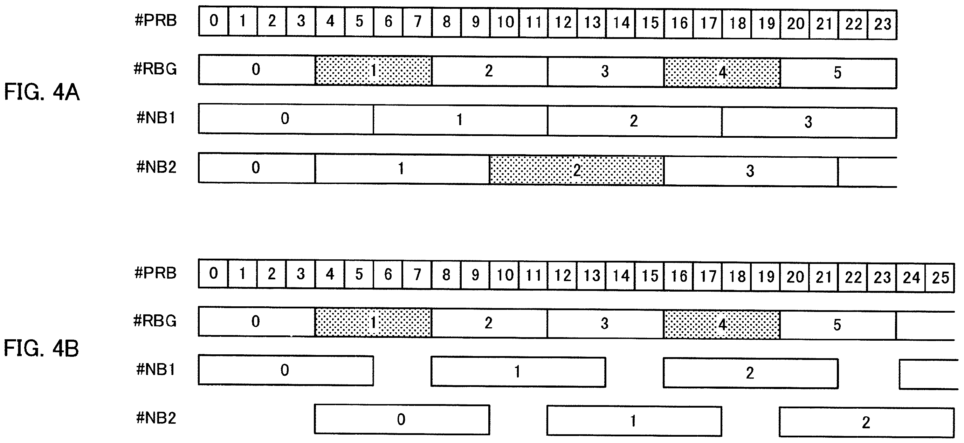

FIG. 1 is a diagram to show an example of the arrangement of narrow bands in a system band. Note that, although, in the following description, a narrow band which has a bandwidth of 1.4 MHz and which allows access to MTC terminals will be described as an NB, this name is by no means limiting as long as these features are provided. For example, this may be referred to as a "PRB set," and/or the like. FIG. 1 presumes that, for example, the whole is formed with 100 PRBs, and focuses on part of the PRBs (the same holds with FIGs. 3 and 4). In FIG. 1, a predetermined narrow band (for example, 1.4 MHz), which is narrower than an LTE system band (for example, 20 MHz), is configured in a portion of a system band. This narrow band is equivalent to a frequency band that can be detected by MTC terminals.

Note that it is preferable to employ a structure, in which the frequency location of a narrow band that serves as a band for the use by MTC terminals can be changed within the system band. For example, MTC terminals should preferably communicate by using different frequency resources per predetermined period (for example, per subframe). By this means, it is possible to achieve traffic offloading for MTC terminals, achieve a frequency diversity effect, and reduce the decrease of spectral efficiency. Consequently, considering the application to frequency hopping, frequency scheduling and so on, MTC terminals should preferably have an RF re-tuning function.

FIG. 1 shows an example case in which one NB is formed with 6 PRBs. As for the method of allocating resources, for example, a radio base station reports a predetermined number of (for example, four) NBs to a user terminal, out of an NB (narrow band) set that is formed with a plurality of NBs allocated over the entire system band, by using higher layer signaling, and, furthermore, the radio base station specifies one NB, out of the four NBs, by using DCI (Downlink Control Information). The user terminal may control the transmission and/or receipt of signals by using the PRBs constituting the specified NB. For example, assume the case where NBs #1, #3, #8 and #13 are specified in advance by higher layer signaling. In this case, out of the four NBs designated, an MTC terminal selects a specific NB that is specified by DCI -- for example, NB #1. The radio base station and/or the MTC terminal control the transmission and receipt of signals using a part or all of PRBs #6 to #11 that constitute NB #1.

In this way, by limiting the number of NBs by specifying a number of NBs in advance by using higher layer signaling, the number of PRBs to be handled in the resource allocation (RA) field in DCI is reduced from the number of PRBs in the whole system band to the number of PRBs selected in advance by higher layer signaling, and therefore the number of PRBs that should be designated in the RA field decreases. By this means, it is possible to reduce the bit size that is required to designate specific PRBs in the RA field with DCI. Also, by limiting the target area in the RA field in this way, it is possible to limit the bands to be subject to CSI measurements (Channel State Information Measurements), and, by this means, it becomes possible to reduce the power consumption or the use of radio resources which an MTC terminal requires for channel state measurements.

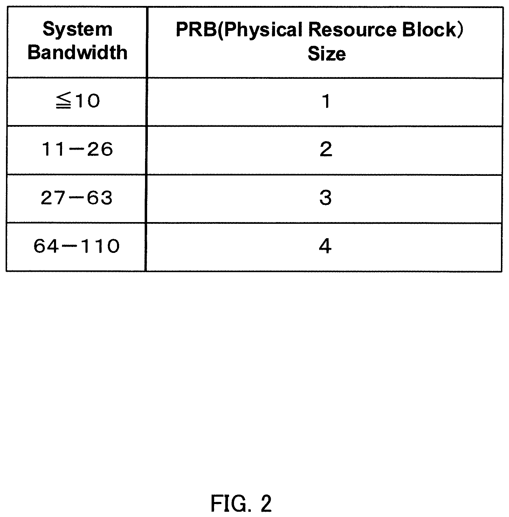

Meanwhile, to normal terminals (normal UEs), data is allocated in the units of per predetermined resource block group (RBG: Resource Block Group) that is formed with a plurality of PRBs units. FIG. 2 shows the relationship between the length of the whole system band and the number of PRBs per RBG. As shown in FIG. 2, in an existing system, the number of PRBs that constitute one RBG is configured differently depending on the system band.

FIG. 3 is a diagram to show an example of the arrangement of NBs, RBGs and PRBs in a system band. As shown in FIG. 3, when an MTC terminal has radio communication with a radio base station, existing user terminals, too, may have radio communication with the radio base station.

FIG. 3 shows an example of resource allocation when the system band is comprised of 100 PRBs. In the case illustrated in FIG. 3, 1 RBG, which serves as the data allocation unit for existing user terminals (legacy terminals), is formed with 4 PRBs. Also, the MTC terminal can use 16 NBs, which are each formed with 6 PRBs, and one NB, which is formed with 4 PRBs (100 PRBs in total).

However, depending on the way these RBGs and NB are arranged, cases may occur where resources cannot be used effectively. For example, assume the case where, as shown in FIG. 3, a radio base station transmits data to a normal user terminal by using RBGs #1 and #4. In this case, RBG #1 is formed with PRBs #4 to #7, and RBG #4 is formed with PRBs #16 to #19. Also, PRBs #4 and #5 constitute a portion of NB #0, PRBs #6 and #7 constitute a portion of NB #1, PRBs #16 and #17 constitute a portion of NB #2, and PRBs #18 and #19 constitute a portion of NB #3.

If the radio base station allocates data to an existing user terminal more preferentially than an MTC terminal, PRBs that overlap with RBGs on NBs cannot be used for the MTC terminal.

That is, the MTC terminal can use only part of the PRBs that constitute NBs #0 to #3. Consequently, in the case illustrated in FIG. 3, the MTC terminal can use only part of the resources, of all NBs, and therefore the MTC terminal's throughput decreases.

Consequently, when an existing terminal and an MTC terminal communicate with a radio base station, how to control the allocation of NB resources so as not to allow the MTC terminal's throughput to drop, while taking care of the allocation of resources for RBGs for use for the existing terminal, is the problem.

So, the present inventors have focused on the fact that the locations of PRBs that overlap between an NB and an RBG can be controlled by applying frequency shifting, and come up with the idea of using a plurality of NB sets that are shifted in the direction of frequency, in radio communication between MTC terminals and radio base stations.

According to one aspect of the present invention, an adequate NB set is selected from a plurality of NB sets that are shifted along the direction of frequency, by taking into account the arrangement of RBGs, and communication with a radio base station is made by using the NBs included in the selected NB set. In this way, by selecting an NB set that does not overlap an RBG (or that has little overlapping portion), a resource arrangement, in which NBs used for allocation for MTC terminals and RBGs for normal user terminals use different resources, is made possible, so that the decrease of throughput can be reduced.

Now, embodiments of the present invention will be described below. Although MTC terminals will be shown as an example of user terminals that are limited to using narrow bands as bands for their use, the application of the present invention is not limited to MTC terminals. Furthermore, although 6-PRB (1.4-MHz) narrow bands will be described below, the present invention can be applied to other narrow bands as well, based on the present specification.

Also, although examples will be shown in the following description in which the present invention is primarily applied to downlink signals that are transmitted from radio base stations to MTC terminals (for example, the PDSCH (Physical Downlink Shared Channel), the EPDCCH (Enhanced Physical Downlink Control Channel), etc.), the present invention is equally applicable to uplink signals that are transmitted from MTC terminals to radio base stations (for example, the PUSCH (Physical Uplink Shared Channel)). Furthermore, although cases will be shown in the following description in which two NB sets are used between an MTC terminal and a radio base station, the number of NB sets is by no means limited to 2. For example, three or more NB sets may be configured and used. Also, the method of arranging NBs is not limited to the examples shown below.

### (First Embodiment)

With a first embodiment, the arrangement of NB set radio resources for use when an existing user terminal communicates with a radio base station by using RBGs and an MTC terminal has downlink and/or uplink communication with the radio base station by using two NB sets, will be described.

FIGs. 4 provide diagrams to show examples of the arrangement of radio resources according to the first embodiment. In FIGs. 4, the existing user terminal is allocated RBG sets for communication with the radio base station, and the MTC terminal is allocated an NB1 set and an NB2 set for communication with the radio base station. In FIG. 4A, the NB1 set and the NB2 set are formed with 16 NBs that are each with 6 PRBs and one NB that is formed with 4 PRBs, as noted earlier with reference to FIG. 2. Note that the band that is formed with 4 PRBs may be configured not to be used for transmitting and/or receiving data. Here, NB1 #16 that constitutes the NB1 set (not illustrated in FIG. 4A) is formed with 4 PRBs, and NB2 #0 that constitutes the NB2 set is formed with 4 PRBs.

In comparison with the NB1 set, the NB2 set is frequency-shifted (moved) to the left by 2 PRBs. Although the NB1 set and the NB2 set are formed with 6-PRB NBs except for one NB at an end and therefore have a cycle of 6 PRBs, in NBs where the same numbers are assigned between the NB1 set and the NB2 set, the PRBs that constitute each NB are different. For example, NB1 #1 is formed with PRBs #6 to #11, and NB2 #1 is formed with PRBs #4 to #9.

According to the first embodiment, the radio base station applies different frequency shifts to the NB set 1 and the NB set 2. That is, the radio base station selects a predetermined NB set from a plurality of NB sets to which frequency shifts are applied, and allocates data to the MTC terminal. Also, the MTC terminal selects one of the NB1 set and the NB2 set, and makes radio communication with the radio base station by using the NBs that constitute this NB set.

Information as to which of the NB1 set and the NB2 set provides the NBs to use to make radio communication with the radio base station may be included in DCI that is transmitted from the radio base station, so that dynamic control is possible. For example, it is possible to add one new bit to DCI, so that the radio base station can use this bit to specify which one of the NB1 set and the NB2 set is used, or the radio base station may use one existing bit of DCI to specify one of the NB1 set and the NB2 set. Also, the information to be included in DCI has only to be information which the MTC terminal needs when selecting an adequate NB set. For example, information that explicitly specifies one of the NB1 set and the NB2 set may be included, or information that implicitly specifies one of the NB1 set and the NB2 set may be included.

As described above, when only one NB is used (FIG. 3), whichever one of NBs #1 to #4 is used, the PRBs that constitute the RBG and the PRBs that constitute the NB overlap, and an MTC terminal can use only part of the NB resources. By contrast with this, according to the first embodiment, even when data is transmitted to the normal user terminal by using RBGs #1 and #4, by transmitting data to the MTC terminal by using #2 of NB2, it becomes possible to use 6 PRBs. By using the NBs that are included in the NB set selected thus, the MTC terminal is able to have radio communication to use downlink signals, uplink signals and so on, with the radio base station. Consequently, according to the first embodiment, an NB set is selected from a plurality of NB sets, and NBs that are included in the NB set and that do not overlap RBGs in use are used, so that, even in situations where the use of conventional methods only results in lowering the throughput, it is possible to reduce the decrease of throughput.

In view of the above, even in situations where the use of conventional methods only results in lowering the throughput of an MTC terminal, the first embodiment can reduce the decrease of throughput in the MTC terminal.

### (Variation)

Note that, the arrangement of NBs shown in FIG. 4A is simply an example. For example, the NB sets are not limited to the structure in which multiple NBs are arranged in a row in the direction of frequency. To be more specific, as shown in FIG. 4A, a structure may be employed, in which, in each NB set, a plurality of NBs are spaced apart in the direction of frequency (to be discontinuous in the direction of frequency) and arranged. In the example shown in FIG. 4B, even when a normal user terminal makes data communication by using RBGs #1 and #4, by using NB1 #1 and NB2 #2, it is possible to enable an MTC terminal to communicate with the radio base station by using 6 PRBs. By this means, it is possible to reduce the decrease of throughput in the MTC terminal. Also, by forming NB sets as shown in FIG. 4B, it becomes possible to reduce the number of NBs that constitute NB sets, so that the number of NBs to allocate to the MTC terminal can be reduced.

Also, an RBG does not have to be formed with 4 PRBs, and may be, for example, formed with 3 or fewer PRBs, or formed with 5 or more PRBs. Also, the number of NB sets to use is by no means limited to 2. For example, a structure to use three or more NB sets may be used. In this case, an MTC terminal may select a predetermined NB set from these multiple NB sets, to which different frequency shifts have been applied. Also, the size of NBs that constitute NB sets is by no means limited to 6 PRBs. For example, an NB may be formed with 5 or fewer PRBs, or formed with 7 or more PRBs.

Also, the method of determining the amounts of shift to apply to a plurality of NB sets is by no means limited to the method described above, and the amounts of shift may be configured as appropriate based on the size of PBGs, the number of NB sets, the size of NBs and so on. For example, the amount of frequency shift between NB sets may be one of 2 PRBs, 3 PRBs and 4 PRBs. In this case, any one NB set is preferably frequency-shifted by 2 PRBs, 3 PRBs or 4 PRBs with respect to another NB set.

Also, the amounts of shift for a plurality of NB sets may be determined according to the locations of RBGs that are actually used in the RBG set. In this case, it is equally possible to determine the amounts of shift for the NB sets in association with the locations of RBGs that are not used in the RBG set.

### (Second Embodiment)

A case will be described with a second embodiment where the frequency locations for detecting (monitoring) a downlink control channel are controlled based on the PDSCH (Physical Downlink Shared Channel).

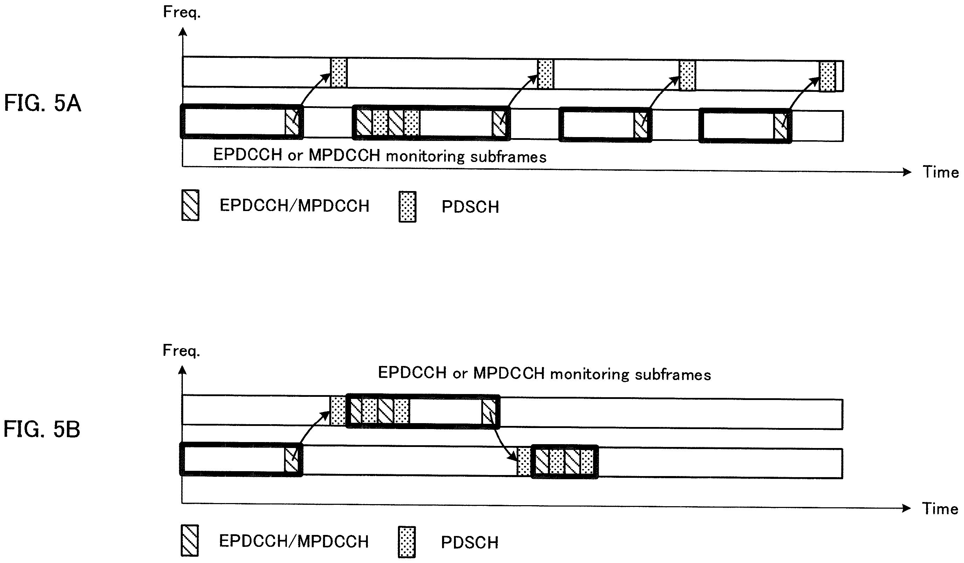

FIGs. 5 provide diagrams to show examples of the arrangement of radio resources according to the second embodiment. FIGs. 5 illustrate the scheduling of signals which an MTC terminal receives in two NBs, following the direction of time. In the methods illustrated in FIG. 5, the MPDCCH (MTC Physical Downlink Control Channel), which is the PDCCH (PDCCH for MTC) for MTC terminals, may be used as a control signal. Here, the MPDCCH may be a signal based on the EPDCCH. The MPDCCH and the EPDCCH may be referred to as a control signal together. When simply the "MPDCCH" is mentioned hereinafter, this will include the EPDCCH as well. FIG. 5A shows a frequency scheduling method to use the MPDCCH, and FIG. 5B shows the frequency scheduling method of the second embodiment using the MPDCCH. The two NBs in FIG. 5 may be, for example, ones that are selected from the two NB sets described with the first embodiment, may be ones that are selected from the same NB set, may be ones that are selected from other NB sets, or may be other NBs.

FIG. 5 shows that frequency retuning is applied when an MTC terminal receives the MPDCCH and the EPDCCH. Also, the parts encased in the rectangles of bold lines are the periods (subframes) in which the MTC terminal monitors the MPDCCH.

In FIGs. 5, the MPDCCH may contain information for PDSCH scheduling assignment. This information for scheduling assignment may include, for example, information that represents the location of the PDSCH resource. The information to represent the location of the PDSCH resource may be, for example, a PRB index (for example, one of 0 to 5) that indicates the location of a PRB in a predetermined narrow band (which is, for example, 6 PRBs), or may be a relative frequency offset from the MPDCCH resource location. Note that the terminal may implicitly identify the PDSCH resource location based on the MPDCCH resource location.

Now, the frequency scheduling method in an MTC terminal, using the MPDCCH (control signal), will be described. According to the method shown in FIG. 5A, a user terminal detects (monitors) the MPDCCH in fixed areas (narrow bands, NBs, etc.), which are reported in advance by higher layer signaling and/or the like. As for higher layer signaling, MTC-SIB (MTC-System Information Block), RAR (Random Access Response), message 4 and/or the like can be used.

The MTC terminal performs the monitoring in order to receive the MPDCCH in the NB designated by higher layer signaling. When the MPDCCH is received, the MTC terminal receives the PDSCH based on information contained in the EPDCCH. The PDSCH may be allocated to the same NB with the MPDCCH, or may be allocated to a different NB. When, based on information contained in the MPDCCH received, the receiving process for the PDSCH is to be carried out in an NB that is different from the NB in which the MPDCCH was received, after a certain period that is necessary for frequency retuning is over, the PDSCH receiving process is performed in an NB that is different from the NB in which the MPDCCH was received. Then, after the certain period that is necessary for retuning passes following the receipt of the PDSCH, the MTC terminal starts the monitoring for receiving the MPDCCH again, in the NB in which the MPDCCH was first received.

Thus, the above method has the advantage that there is no ambiguity in the selection of the NB because the NB to receive the MPDCCH is fixed. However, given that the MTC terminal always receives the MPDCCH in a specific NB, if the NB to receive the PDSCH and the NB to receive the MPDCCH are different NBs, frequency retuning takes place every time the MTC terminal switches the NB.

FIG. 5B shows a frequency scheduling method that takes these points in account. Also, parts that are the same as in the above-described method will not be described again.

With the methods according to the second embodiment, too, when the MPDCCH is received, an MTC terminal receives the PDSCH based on information contained in the MPDCCH.

By contrast, according to the method illustrated in FIG. 5B, the NB for monitoring the MPDCCH is not limited to one NB. The MTC terminal changes the MPDCCH-detecting NB based on the NB the PDSCH has been received. That is, the MTC terminal exerts control so that MPDCCH-monitoring is conducted in the NB in which the PDSCH has been received. By this means, after the PDSCH is received, it is no not necessary to monitor the MPDCCH in a different NB, so that it is possible to reduce the number of times to make frequency retuning in comparison to conventional methods. Note that, as for the NB in which the MTC terminal monitors the MPDCCH, the last NB in which the PDSCH was received is preferable. Also, the use of this method allows the MPDCCH (EPDCCH) to be distributed and allocated to different NBs, so that it is possible to prevent the concentration of load in a specific NB.

Furthermore, according to this method, it is possible to off-load the DCI contained in the MPDCCH in NBs showing good channel states, based on channel state information such as the CQI (Channel Quality Indicator) and/or others. This makes it possible to lower the aggregation level upon transmission, and, consequently, the capacity of NBs can be improved.

Note that, if, after the PDSCH is received, a certain period of monitoring is conducted in order to receive the MPDCCH and yet no MPDCCH is received in this fixed period, control may be executed so that the monitoring period is changed to a pre-determined NB.

### (Third Embodiment)

The application of cross-subframe scheduling (SF Scheduling) and same-subframe scheduling will be described with the third embodiment. Note that the MTC terminals to apply same-subframe scheduling to may be normal coverage UEs, and/or small enhancement coverage UEs where frequency hopping is used but where the number of repetitions is small.

Normally, MTC terminals use narrow bands, and therefore employ cross-subframe scheduling. However, in MTC under certain conditions, as mentioned earlier, same-subframe scheduling can be employed. When cross-subframe scheduling and same-subframe scheduling are employed, how an MTC terminal should distinguish between these methods and control reception is the problem. The method for solving this problem will be described with the third embodiment.

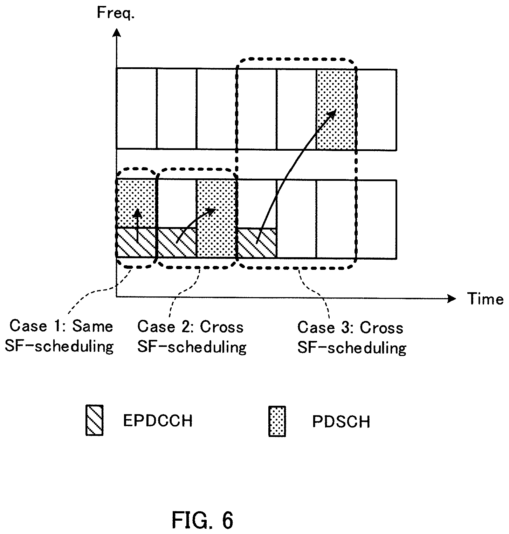

FIG. 6 is a diagram to show an example of the arrangement of radio resources according to the third embodiment. FIG. 6 shows three cases of subframe (SF) scheduling. The two NBs in FIG. 6 may be, for example, ones that are selected from the two NB sets described with the first embodiment, may be ones that are selected from the same NB set, may be ones that are selected from other NB sets, or may be other NBs. Also the NBs may be comprised of 6 PRBs, or may be comprised of a different number of PRBs.

In the three cases shown in FIG. 6, an MTC terminal is controlled to operate differently depending on the location of the PDSCH indicated in the RA field contained in the DCI of the EPDCCH that has been received. To be more specific, the MTC terminal judges the subframe location to receive the PDSCH based on the subframe location (PRB location) of the EPDCCH (including the MPDCCH, so that these may be referred to as a downlink control channel together) and the subframe location of the PDSCH indicated in the RA field.

The SF scheduling according to the third embodiment may be carried out in the following three cases depending on the PRB locations of the PDSCH, and an MTC terminal judges which of cases (1) to (3) SF scheduling fits, based on information that is transmitted.
Case (1): When PRBs that are different from the PRBs of the EPDCCH are designated as PRBs for the PDSCH in the same NB as that of the EPDCCH, the MTC terminal judges on same SF-scheduling (same-subframe scheduling).
Case (2): When PRBs that are at least partly the same as those of the EPDCCH are designated as PRBs for the PDSCH in the same NB as that of the EPDCCH, the MTC terminal judges on cross-SF scheduling (cross-subframe scheduling).
Case (3): When an NB that is different from that of the EPDCCH is designated as PRBs for the PDSCH, the MTC terminal judges on cross-SF scheduling.

The SF scheduling in cases (1) to (3) will be described in detail below.

First, the MTC terminal judges whether or not the NB where the EPDCCH is allocated and the NB where PDSCH specified by the EPDCCH is allocated are the same.

When the EPDCCH and the PDSCH are arranged in different NBs, the MTC terminal cannot receive the PDSCH in the present NB. In this case, the MTC terminal judges that case (3) of cross-SF scheduling applies. In this case, since, for example, the NB in which the EPDCCH is arranged and the NB in which the PDSCH is arranged are different, a change of frequency follows.

When the EPDCCH and the PDSCH are arranged in the same NB, the MTC terminal judges whether the PRBs where the EPDCCH is allocated and the PRBs where the PDSCH is allocated are the same. When the PRBs allocated to the EPDCCH and the PRBs allocated to the PDSCH are arranged in the same NB and these PRBs do not overlap, the MTC terminal judges that case (1) of same SF-scheduling applies. Also, when the PRBs allocated to the EPDCCH and the PRBs allocated to the PDSCH overlap even only partially, the MTC terminal judges that case (2) of cross-SF scheduling applies.

In the event of case (2), the MTC terminal judges that the PDSCH is arranged in a different location than the EPDCCH, as described above, and receives the EPDCCH and the PDSCH.

The MTC terminal judges the type of scheduling based on information related to the arrangement of the PDSCH designated in the RA contained in the EPDCCH, it is possible to switch between cross-SF scheduling and same SF-scheduling, dynamically, without using additional signaling and/or the like.

Also, although an example has been described above, in which, when the EPDCCH and the PDSCH are arranged as described as case (2), cross-SF scheduling is applied by allocating the PDSCH to a neighboring subframe, the allocation along the direction of time is not limited to the example described above. For example, a method, in which the PDSCH is not scheduled in a location to neighbor the EPDCCH, but in which, instead, the PDSCH is allocated in a location that is one subframe or more apart, may be used.

Also, if the EPDCCH is structured as to use all the PRBs that constitute the NB, once it is found out that the location of the PDSCH specified in the RA is in the same NB as that of the EPDCCH, it also becomes clear that the EPDCCH and the PDSCH occupy the same PRBs. In this case, cross-SF scheduling may be judged on without using PDSCH-related information.

Also, in the event of case 3, a radio base station may arrange the PDSCH taking retuning (for example, one subframe) into consideration.

### (Variation)

Although the example described above is structured to switch between same SF-scheduling and cross-SF scheduling depending on the arrangement of the EPDCCH and the PDSCH on NBs, this is by no means limiting. It is equally possible to change the type of SF scheduling by transmitting information about the type of SF scheduling to an MTC terminal. For example, a structure may be employed in which this information is transmitted by using DCI, or a structure may be employed in which this information is transmitted by using higher layer signaling. In this case, DCI has to be transmitted more frequently than higher layer signaling is transmitted, so that it is preferable to use a structure to report the above information by using DCI when dynamic scheduling is used, and use a structure to report the above information by using higher layer signaling when non-dynamic scheduling (fixed scheduling) is used.

In this way, when a structure to make it possible to change the type of SF scheduling by directly reporting the type of SF scheduling to an MTC terminal by using information that is transmitted independently, the MTC terminal does not have to judge the type of SF scheduling base on the relationship between the EPDCCH and the PDSCH. By this means, it becomes possible to reduce the processing load, and reduce the amount of power consumed, in the MTC terminal.

### (Radio Communication System)

Now, the structure of the radio communication system according to an embodiment of the present invention will be described below. In this radio communication system, the radio communication methods according to the above-described embodiments of the present invention are employed. Note that the radio communication methods of the above-described embodiments may be applied individually or may be applied in combination. Here, although an MTC terminal will be shown as an exemplary user terminal (UEs) that is limited to using a narrow band as a band for its use, the present invention is by no means limited to MTC terminals.

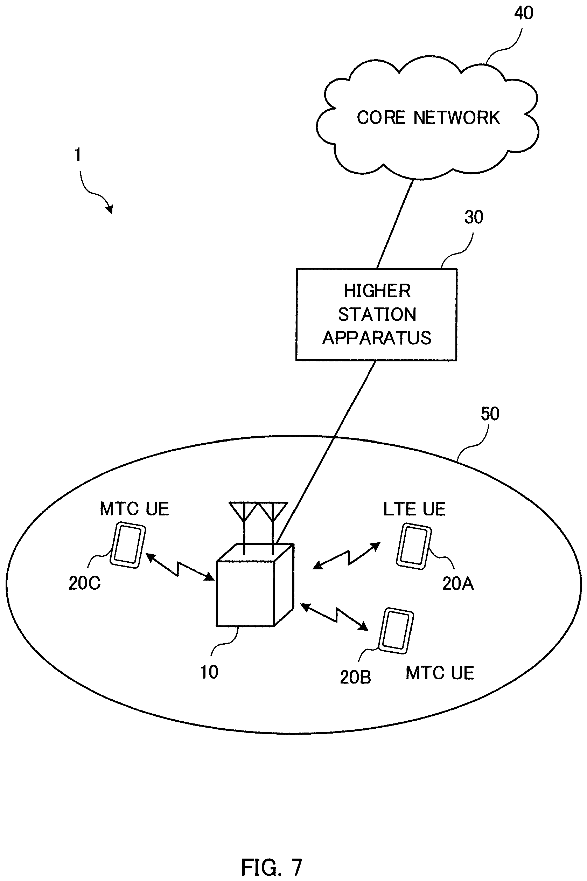

FIG. 7 is a diagram to show a schematic structure of the radio communication system according to an embodiment of the present invention. The radio communication system 1 shown in FIG. 7 is an example of employing an LTE system in the network domain of a machine communication system. The radio communication system 1 can adopt carrier aggregation (CA) and/or dual connectivity (DC) to group a plurality of fundamental frequency blocks (component carriers) into one, where the LTE system bandwidth constitutes one unit. Also, although, in this LTE system, the system band is configured to maximum 20 MHz in both the downlink and the uplink, this configuration is by no means limiting. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 is comprised of a radio base station 10 and a plurality of user terminals 20A, 20B and 20C that are connected with the radio base station 10. The radio base station 10 is connected with a higher station apparatus 30, and connected with a core network 40 via the higher station apparatus 30. Note that the higher station apparatus 30 may be, for example, an access gateway apparatus, a radio network controller (RNC), a mobility management entity (MME) and so on, but is by no means limited to these.

A plurality of user terminal 20A, 20B and 20C can communicate with the radio base station 10 in a cell 50. For example, the user terminal 20A is a user terminal that supports LTE (up to Rel-10) or LTE-Advanced (including Rel-10 and later versions) (hereinafter referred to as an "LTE terminal"), and the other user terminals 20B and 20C are MTC terminals that serve as communication devices in machine communication systems. Hereinafter the user terminals 20A, 20B and 20C will be simply referred to as "user terminals 20," unless specified otherwise.

Note that the MTC terminals 20B and 20C are terminals that support various communication schemes including LTE and LTE-A, and are by no means limited to stationary communication terminals such electric meters, gas meters, vending machines and so on, and can be mobile communication terminals such as vehicles. Furthermore, the user terminals 20 may communicate with other user terminals directly, or communicate with other user terminals via the radio base station 10.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, the MIB (Master Information Blocks) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel), an MPDCCH (MTC PDCCH) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH is frequency-division-multiplexed with the PDSCH and used to communicate DCI and so on, like the PDCCH. Also, the MPDCCH is a PDCCH (PDCCH for MTC) used for MTC terminals, and used to communicate DCI and so on, like the PDCCH and the EPDCCH.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgement signals and so on are communicated by the PUCCH. By means of the PRACH, random access preambles for establishing connections with cells are communicated.

### <Radio base station>

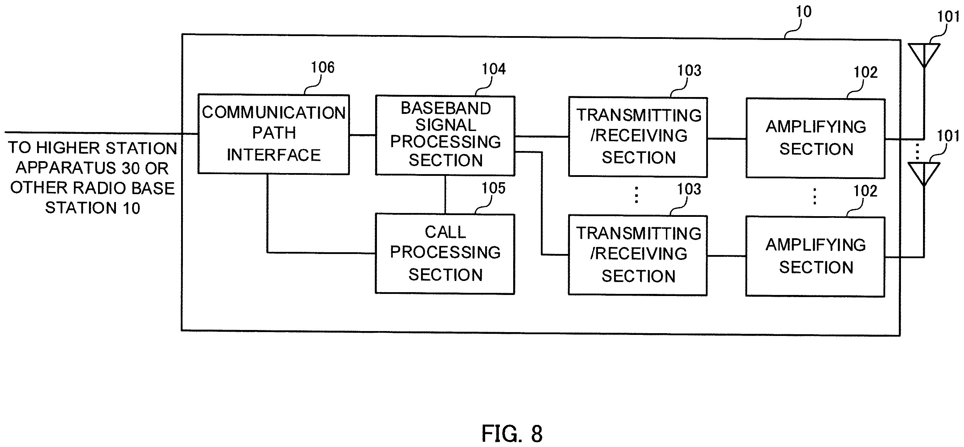

FIG. 8 is a diagram to show an example of an overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as an RLC retransmission control transmission process, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The transmitting/receiving sections 103 can be constituted by transmitters/receivers, transmitting/receiving circuits or transmitting/receiving devices that can be described based on common understanding of the technical field to which the present invention pertains. Note that a transmitting/receiving section 103 may be structured as a transmitting/receiving section in one entity, or may be constituted by a transmitting section and a receiving section.

The radio frequency signals having been subjected to frequency conversion in the transmitting/receiving sections 103 are amplified in the amplifying sections 102, and transmitted from the transmitting/receiving antennas 101. The transmitting/receiving sections 103 can transmit and/or receive various signals in a narrow bandwidth (for example, 1.4 MHz) that is more limited than a system band (for example, one component carrier).

When there are a plurality of narrow band sets that are formed with a plurality of narrow bands arranged along the direction of frequency in a row, the transmitting/receiving sections 103 can send DCI for selecting a narrow band. Also, a plurality of narrow band sets may be shifted in the direction of frequency. Also, the transmitting/receiving sections 103 may transmit, to the user terminal 20, information that is needed to monitor the subframes for receiving the EPDCCH, information related to the PRBs (Physical Resource Blocks) that constitute the PDSCH, the EPDCCH and so on.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (for example, an interface in compliance with the CPRI (Common Public Radio Interface)m such as optical fiber, the X2 interface).

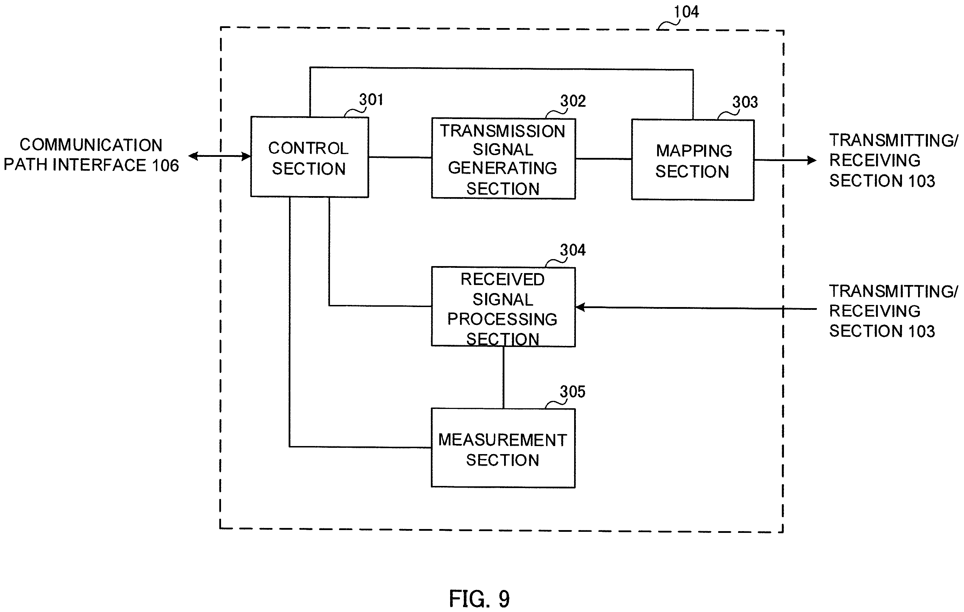

FIG. 9 is a diagram to show an example of a functional structure of a radio base station according to one embodiment of the present invention. Note that, although FIG. 9 primarily shows functional blocks that pertain to characteristic parts of the present embodiment, the radio base station 10 has other functional blocks that are necessary for radio communication as well. As shown in FIG. 9, the baseband signal processing section 104 has a control section (scheduler) 301, a transmission signal generating section (generating section) 302, a mapping section 303, a received signal processing section 304 and a measurement section 305.

The control section (scheduler) 301 controls the whole of the radio base station 10. The control section 301 can be constituted by a controller, a control circuit or a control device that can be described based on common understanding of the technical field to which the present invention pertains.

The control section 301, for example, controls the generation of signals in the transmission signal generating section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of downlink data signals that are transmitted in the PDSCH and downlink control signals that are communicated in the PDCCH and/or the EPDCCH (MPDCCH). Also, the control section 301 controls the scheduling of synchronization signals, and downlink reference signals such as CRSs (Cell-specific Reference Signals), CSI-RSs (Channel State Information Reference Signals), DM-RSs (Demodulation Reference Signals) and so on.

Also, the control section 301 controls the scheduling of uplink data signals transmitted in the PUSCH, uplink control signals transmitted in the PUCCH and/or the PUSCH (for example, delivery acknowledgement signals (HARQ-ACKs)), random access preambles transmitted in the PRACH, uplink reference signals and so on.

The control section 301 controls the transmission signal generating section 302 and the mapping section 303 to allocate various signals to narrow bands and transmit these to the user terminals 20. For example, the control section 301 controls downlink broadcast information (the MIB, SIBs, etc.), the EPDCCH, the PDSCH and so on, to be transmitted in a narrow band.

Also, the control section 301 controls the allocation of RBGs (Resource Block Groups), which are formed with a predetermined number of PRBs (Physical Resource Blocks) in accordance with the width of the system band. RBGs are, for example, used for communication with the user terminal 20A. Also, the control section 301 controls the allocation of narrow bands (NBs), which are formed with a predetermined number of PRBs (for example, 6 PRBs). NB are, for example, used for communication with the user terminals 20B and 20C. Here, a plurality of NBs may be configured. The RBG and NBs are arranged continuously in the direction of frequency, and may be referred to as "RBG sets" and "NB sets," respectively.

The control section 301 controls the amount of shift to apply to at least one NB set, among a plurality of NB sets, in the direction of frequency, depending on the PRBs that constitute the RBG that is used. To be more specific, the control section 301 may control the amount of shift so that the PRBs that constitute the RBG that is used and the PRBs that constitute the NBs in an NB set that has been shifted in the direction of frequency do not overlap (first embodiment). In this case, the control section 301 may exert control so that a command to switch the NB set to use among a plurality of NB sets is reported to the user terminals 20B and 20C. In this case, the control section 301 may exert control so that the command is reported to the user terminals 20B and 20C by using DCI and so on.

When the EPDCCH is to be transmitted to the user terminal 20, the control section 301 may control the EPDCCH to be always transmitted in a predetermined NB. Also, the control section 301 may report the predetermined NB to transmit the EPDCCH by using higher layer signaling (for example, MTC-SIB, RAR (Random Access Response), message 4, etc.), DCI and so on. Also, the control section 301 may control the transmission signal generating section 302 to transmit the EPDCCH to the user terminal 20 in the NB in which the PDSCH has been transmitted (second embodiment).

Also, the control section 301 may exert control so that information that is needed to monitor the EPDCCH (for example, the number of subframes for monitoring the EPDCCH, information to specify the NBs where the monitoring takes place, and so on), to the user terminal 20.

The control section 301 may exert control so that information related to the NB and PRBs to transmit the PDSCH is reported to the user terminal 20 depending on the RA (Resource Allocation) field contained in the DCI of the EPDCCH that has been received (third embodiment). Also, control section 301 may control the subframe locations to transmit the EPDCCH and the PDSCH to the user terminal 20 based on the relationship between EPDCCH PRBs and PDSCH PRBs.

The control section 301 may exert control so that a report as to whether scheduling is made in the same subframe (same SF-scheduling) or whether scheduling is made across different subframes (cross-SF scheduling) is sent by using DCI, higher layer signaling and so on (variation of the third embodiment).

The transmission signal generating section (generation section) 302 generates downlink signals (downlink control signals, downlink data signals, downlink reference signals and so on) based on commands from the control section 301, and outputs these signals to the mapping section 303. The transmission signal generating section 302 can be constituted by a signal generator, a signal generating circuit or a signal generating device that can be described based on common understanding of the technical field to which the present invention pertains.

For example, the transmission signal generating section 302 generates DL assignments, which report downlink signal allocation information, and UL grants, which report uplink signal allocation information, based on commands from the control section 301. Also, the downlink data signals are subjected to a coding process and a modulation process, based on coding rates and modulation schemes that are determined based on channel state information (CSI) from each user terminal 20 and so on.

Also, based on the amount of frequency shift configured for NBs, the transmission signal generating section 302 outputs a signal that contains information about the NB sets that have been frequency-shifted, to the mapping section 303.

Also, based on a command from the control section 301, the transmission signal generating section 302 generates DCI that contains an RA, in which information about the location of the PDSCH is included, and outputs this to the mapping section 303.

The mapping section 303 maps the downlink signals generated in the transmission signal generating section 302 to predetermined narrow band radio resources (for example, maximum 6 resource blocks) based on commands from the control section 301, and outputs these to the transmitting/receiving sections 103. The mapping section 303 maps the downlink signals generated in the transmission signal generating section 302 to predetermined radio resources (for example, an RBG) based on a command from the control section 301, and outputs these to the transmitting/receiving sections 103. The mapping section 303 can be constituted by a mapper, a mapping circuit or a mapping device that can be described based on common understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals and so on). For the received signal processing section 304, a signal processor, a signal processing circuit or a signal processing device that can be described based on common understanding of the technical field to which the present invention pertains can be used.

The received signal processing section 304 outputs the decoded information acquired through the receiving processes to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or a measurement device that can be described based on common understanding of the technical field to which the present invention pertains.

Also, by using the received signals, the received signal processing section 304 may measure the received power (for example, RSRP (Reference Signal Received Power)), the received quality (for example, RSRQ

### (Reference Signal Received Quality)), channel states and so on. The measurement results may be output to the control section 301.

### <User terminal>

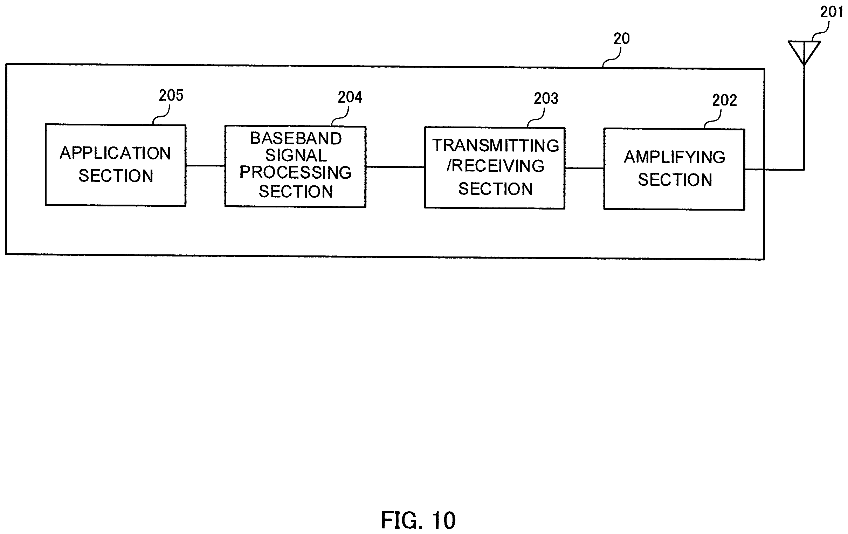

FIG. 10 is a diagram to show an example of an overall structure of a user terminal according to an embodiment of the present invention. Note that, although not described in detail herein, normal LTE terminals may operate to act as MTC terminals. A user terminal 20 has a transmitting/receiving antenna 201, an amplifying section 202, a transmitting/receiving section 203, a baseband signal processing section 204 and an application section 205. Also, the user terminal 20 may have a plurality of transmitting/receiving antennas 201, amplifying sections 202, transmitting/receiving sections 203 and/or others.

A radio frequency signal that is received in the transmitting/receiving antenna 201 is amplified in the amplifying section 202. The transmitting/receiving section 203 receives the downlink signal amplified in the amplifying section 202.

The received signal is subjected to frequency conversion and converted into the baseband signal in the transmitting/receiving section 203, and output to the baseband signal processing section 204. The transmitting/receiving section 203 can be constituted by a transmitters/receiver, a transmitting/receiving circuit or a transmitting/receiving device that can be described based on common understanding of the technical field to which the present invention pertains. Note that the transmitting/receiving section 203 may be structured as a transmitting/receiving section in one entity, or may be constituted by a transmitting section and a receiving section.

When there are a plurality of narrow band sets that are formed with a plurality of narrow bands continuously or discontinuously arranged along the direction of frequency, the transmitting/receiving section 203 can send DCI for selecting a narrow band. Also, a plurality of narrow band sets may be shifted in the direction of frequency. Also, the transmitting/receiving section 203 may receive, from the radio base station 10, information that is needed to monitor the subframes for receiving the EPDCCH, information related to the PRBs (Physical Resource Blocks) that constitute the PDSCH, the EPDCCH and so on.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to the transmitting/receiving section 203. The baseband signal that is output from the baseband signal processing section 204 is converted into a radio frequency bandwidth in the transmitting/receiving section 203. The radio frequency signal that is subjected to frequency conversion in the transmitting/receiving section 203 is amplified in the amplifying section 202, and transmitted from the transmitting/receiving antenna 201.

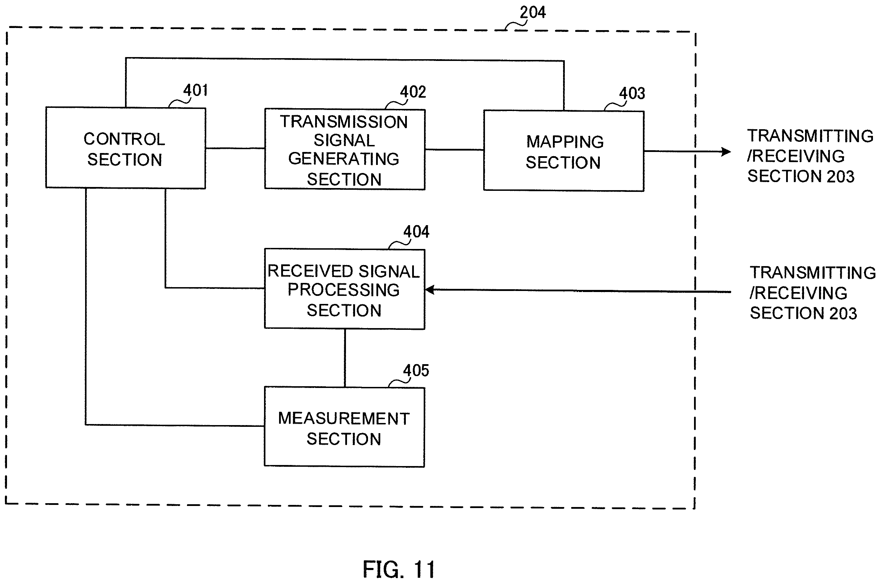

FIG. 11 is a diagram to show an example of a functional structure of a user terminal according to one embodiment of the present invention. Note that, although FIG. 11 primarily shows functional blocks that pertain to characteristic parts of the present embodiment, the user terminal 20 has other functional blocks that are necessary for radio communication as well. As shown in FIG. 11, the baseband signal processing section 204 provided in the user terminal 20 has a control section 401, a transmission signal generating section (generation section) 402, a mapping section 403, a received signal processing section 404 and a measurement section 405.

The control section 401 controls the whole of the user terminal 20. The control section 401 can be constituted by a controller, a control circuit or a control device that can be described based on common understanding of the technical field to which the present invention pertains.

The control section 401, for example, controls the generation of signals in the transmission signal generating section 402, the allocation of signals by the mapping section 403, and so on. Furthermore, the control section 401 controls the signal receiving processes in the received signal processing section 404, the measurements of signals in the measurement section 405, and so on.

The control section 401 acquires the downlink control signals (signals transmitted in PDCCH/EPDCCH (MPDCCH)) and downlink data signals (signals transmitted in the PDSCH) transmitted from the radio base station 10, from the received signal processing section 404. The control section 401 controls the generation of uplink control signals (for example, delivery acknowledgement signals (HARQ-ACKs) and so on) and uplink data signals based on the downlink control signals, the results of deciding whether or not re transmission control is necessary for the downlink data signals, and so on.

When information to indicate whether to operate in normal coverage mode or in coverage enhancement mode is input from the received signal processing section 404, the control section 401 can judge the subject terminal's mode based on this information.

Based on information contained in the DCI and so on transmitted from the radio base station 10, the control section 401 selects an NB set to use to transmit and receive signals with the radio base station 10 from a plurality of NB sets (first embodiment). Then, the control section 401 communicates with the radio base station 10 by using the NBs of the selected NB set. Furthermore, the control section 401 controls the received signal processing section 404 and measurement section 405 in accordance with the selection of NBs.

The control section 401 may exert control so that the EPDCCH is received in an NB that is reported via higher layer signaling (for example MTC-SIB, RAR, message 4, and so on) and/or DCI transmitted from the radio base station 10. Also, the control section 401 may control the EPDCCH to be received in the NB in which the PDSCH has been received. In this case, the control section 401 may exert control so that the EPDCCH is received in the last NB in which the PDSCH has been received (second embodiment).

Also, the control section 401 may exert control so that the EPDCCH is monitored based on information that is necessary for monitoring the EPDCCH (for example, the number of subframes for monitoring the EPDCCH, information to specify the NBs where the monitoring takes place, and so on), transmitted from the radio base station.

Also, the control section 401 may identify the location where the PDSCH has been received based on the PDSCH-related information (for example, information about the NB, the PRBs of the PDSCH, etc.) that is specified by information contained in the RA field, included in the DCI of the EPDCCH that has been received. In this case, the control section 401 may judge on same-SF scheduling or cross-SF scheduling, as appropriate, based on the relationship between the locations of the EPDCCH and the PDSCH in the NB (third embodiment).

Also, the control section 401 may switch between these same SF scheduling and cross-SF scheduling based on signals reported thereto. To be more specific, the control section 401 may switch between same SF scheduling and cross-SF scheduling based on DCI, higher layer signaling and so on that have been received.

The transmission signal generating section 402 generates uplink signals (uplink control signals, uplink data signals, uplink reference signals and so on) based on commands from the control section 401, and outputs these signals to the mapping section 403. The transmission signal generating section 402 can be constituted by a signal generator, a signal generating circuit or a signal generating device that can be described based on common understanding of the technical field to which the present invention pertains.

For example, the transmission signal generating section 402 generates uplink control signals such as delivery acknowledgement signals (HARQ-ACKs), channel state information (CSI) and so on, based on commands from the control section 401. Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal.

The mapping section 403 maps the uplink signals generated in the transmission signal generating section 402 to radio resources (maximum 6 resource blocks) based on commands from the control section 401, and outputs these to the transmitting/receiving sections 203. The mapping section 403 can be constituted by a mapper, a mapping circuit or a mapping device that can be described based on common understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or a signal processing device that can be described based on common understanding of the technical field to which the present invention pertains.

Also, the received signal processing section 404 can constitute the receiving section according to the present invention.

The received signal processing section 404 applies receiving processes to the signals received from the radio base station 10. The received signal processing section 404 output the decoded information that is acquired through the receiving processes to the control section 401. The received signal processing section 404 outputs, for example, broadcast information, system information, RRC signaling, DCI and so on, to the control section 401. Also, the received signal processing section 404 outputs the received signals, the signals after the receiving processes and so on to the measurement section 405.

The measurement section 405 conducts measurements with respect to the received signals. The measurement section 405 can be constituted by a measurer, a measurement circuit or a measurement device that can be described based on common understanding of the technical field to which the present invention pertains.

The measurement section 405 may measure, for example, the received power (for example, RSRP), the received quality (for example, RSRQ), the channel states and so on of the received signals. The measurement results may be output to the control section 401.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, radio resources may be specified by indices. Also, "channels" and/or "symbols" may be replaced by "signals" (or "signaling"). Also, "signals" may be "messages." Furthermore, "component carriers" (CCs) may be referred to as "carrier frequencies," "cells" and so on.

The examples/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the examples/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (the MIB (Master Information Block) and SIBs (System Information Blocks))), other signals or combinations of these. Also, RRC signaling may include, for example, an RRC connection setup message, RRC connection reconfiguration message, and so on.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining example s, and should by no means be construed to limit the present invention in any way.

The disclosure of Japanese Patent Application No. 2015-099542, including the specification, drawings and abstract, is incorporated herein by reference in its entirety.

## Claims

1. A user terminal, in which a band to use is limited to a partial narrow band in a system band, the user terminal comprising:
a control section that selects a predetermined narrow band set that is formed with a plurality of narrow bands; and
a receiving section that receives a downlink signal in a narrow band that is included in the predetermined narrow band set,
wherein the control section selects the predetermined narrow band set from a plurality of narrow band sets, to which different frequency shifts are applied.

2. The user terminal according to claim 1, wherein among the plurality of narrowband sets, one narrow band set is applied with a frequency shift of 2 to 4 PRBs (Physical Resource Blocks) with respect to anotye narrow band set.

3. The user terminal according to claim 1 or claim 2, wherein:
the receiving section receives DCI (Downlink Control Information); and
the control section selects the predetermined narrow band set based on the DCI.

4. The user terminal according to one of claim 1 to claim 3, wherein the receiving section receives a PDSCH (Physical Downlink Shared Channel), and detects a downlink control channel in a narrow band in which the PDSCH is received.

5. The user terminal according to one of claim 1 to claim 4, wherein the receiving section performs a receiving process of a signal that is subject to same-subframe scheduling or a signal that is subject to cross-subframe scheduling, based on a relationship between locations of PRBs of a downlink control channel and locations of PRBs of a PDSCH specified in an RA (Resource Allocation) field in DCI transmitted in the downlink control channel.

6. The user terminal according to claim 5, wherein, when the locations of the PRBs of the downlink control channel and the locations of the PRBs of the PDSCH specified in the RA field are in a same narrow band and in different PRBs, the receiving section receives the signal that is subject to same-subframe scheduling.

7. The user terminal according to claim 5, wherein, when the locations of the PRBs of the downlink control channel and the locations of the PRBs of the PDSCH specified in the RA field are in a same narrow band and in at least partly overlapping PRBs, the receiving section receives the signal that is subjected to cross-subframe scheduling.

8. A radio base station that communicates with a user terminal, in which a band to use is limited to a partial narrow band in a system band, the radio base station comprising:
a control section that applies different frequency shifts to each of a plurality of narrow band sets that are formed with a plurality of narrow bands; and
a transmission section that transmits a downlink signal in a narrow band included in the predetermined narrow band set.

9. A radio communication system, in which a user terminal, in which a band to use is limited to a partial narrow band in a system band, communicates with a radio base station, the radio communication system comprising:
a control section that selects a predetermined narrow band set that is formed with a plurality of narrow bands; and
a receiving section that receives a downlink signal in a narrow band that is included in the predetermined narrow band set,
the control section selects the predetermined narrow band set from a plurality of narrow band sets, to which different frequency shifts are applied.

10. A radio communication method for allowing a user terminal, in which a band to use is limited to a partial narrow band in a system band, to communicate with a radio base station, the radio communication method comprising the steps of:
selecting a predetermined narrow band set that is formed with a plurality of narrow bands; and
receiving a downlink signal in a narrow band that is included in the predetermined narrow band set,
wherein the predetermined narrow band set is selected from a plurality of narrow band sets, to which different frequency shifts are applied.
